# EUROPEAN PATENT APPLICATION

(11) **EP 2 511 740 A1**
(43) Date of publication of application: **17.10.2012**
(21) Application number: 12162136.1
(22) Date of filing: 29.03.2012
(51) Int. Cl.: G02B 6/00, G02F 1/1333

(54) **Display**

(30) Priority: 11.04.2011 JP 2011087245
(71) Applicant: Funai Electric Co., Ltd., Daito-shi, Osaka 574-0013 (JP)
(72) Inventor: Horiuchi, Hirofumi, Daito-shi, Osaka 574-0013 (JP)
(74) Representative: Grünecker, Kinkeldey, Stockmair & Schwanhäusser

(57) **Abstract**

This display (100) includes a display module (40) including a substrate (52) mounted with a light source (51), a light guide (53) guiding light received from the light source and a platelike member of a metal (43) radiating heat generated by the light source. The platelike member integrally includes a substrate mounting portion (43c), a first heat radiation portion (43d) extending from a first end portion of the substrate mounting portion oppositely to the light guide and a second heat radiation portion (43e) extending from a second end portion of the substrate mounting portion oppositely to the first heat radiation portion.

## Description

### BACKGROUND OF THE INVENTION

### Field of the Invention

The present invention relates to a display, and more particularly, it relates to a display including a substrate mounted with a light source and a platelike member of a metal having a function of radiating heat generated by the light source.

### Description of the Background Art

A display including a substrate mounted with a light source and a platelike member of a metal having a function of radiating heat generated by the light source is known in general, as disclosed in Japanese Patent Laying-Open No. 2007-12416, for example.

The aforementioned Japanese Patent Laying-Open No. 2007-12416 discloses an illuminator including a PCB (Printed Circuit Board) (substrate) mounted with an LED (Light-Emitting Diode) (light source), a light frame consisting of a sheet metal member having thermal conductivity and a keep plate. This illuminator is employed as a backlight for a liquid crystal display module. In this illuminator, the light frame is formed to have an L-shaped section, while the keep plate is formed to have a U-shaped section. The inner side surface of the light frame having the L-shaped section is mounted on the back surface of the PCB not mounted with the LED, and formed to hold the front surface of the PCB and a light guide in a state opposed to each other. The inner side surface of the keep plate having the U-shaped section is formed to be mounted on a portion, other than that mounted with the LED, of the front surface of the PCB mounted with the LED. In other words, the inner side surfaces of the keep plate and the light frame hold the PCB therebetween in this illuminator. Thus, heat generated by the LED when emitting light is transmitted to the PCB, and thereafter radiated through the keep plate and the light frame mounted on the front and back surfaces of the PCB respectively. Consequently, the heat generated by the LED is efficiently radiated to both sides of the LED (sides closer to the front and back surfaces of the PCB respectively).

However, the illuminator disclosed in the aforementioned Japanese Patent Laying-Open No. 2007-12416 employs two components, i.e., the light frame and the keep plate, in order to efficiently radiate the heat generated by the LED to both sides of the LED (sides closer to the front and back surfaces of the PCB respectively), and hence the number of components is disadvantageously increased.

### SUMMARY OF THE INVENTION

The present invention has been proposed in order to solve the aforementioned problem, and an object of the present invention is to provide a display capable of efficiently radiating heat generated by a light source without increasing the number of components.

A display according to an aspect of the present invention includes a display module and a housing storing the display module therein, while the display module includes a substrate having a mounting surface mounted with a light source, a light guide arranged to be opposed to the mounting surface of the substrate for guiding light received from the light source toward the display cell and a platelike member of a metal, mounted with a surface of the substrate opposite to the mounting surface, having a function of radiating heat generated by the light source, and the platelike member integrally includes a substrate mounting portion mounted with the substrate, a first heat radiation portion extending from a first end portion of the substrate mounting portion oppositely to the light guide and a second heat radiation portion extending from a second end portion of the substrate mounting portion oppositely to the first heat radiation portion.

In the display according to the aspect of the present invention, as hereinabove described, the platelike member of a metal, mounted with the surface of the substrate opposite to the mounting surface, having the function of radiating the heat generated by the light source is formed to integrally include the substrate mounting portion mounted with the substrate, the first heat radiation portion extending from the first end portion of the substrate mounting portion oppositely to the light guide and the second heat radiation portion extending from the second end portion of the substrate mounting portion oppositely to the first heat radiation portion. Thus, the first and second heat radiation portions integrally formed on the platelike member (substrate mounting portion) mounted with the surface of the substrate opposite to the mounting surface can radiate the heat generated by the light source to both sides of the light source (in the extensional directions of the first and second heat radiation portions). Consequently, the heat generated by the light source can be efficiently radiated without increasing the number of components, dissimilarly to a case where the display is separately provided with a member for radiating the heat generated by the light source to both sides of the light source.

In the aforementioned display according to the aspect, the first heat radiation portion preferably includes a folded portion folded toward the second end portion of the substrate mounting portion. According to this structure, a heat radiation area of the first heat radiation portion can be enlarged while reducing the length (plane area) of the first heat radiation portion in a direction opposite to the light guide, by folding the first heat radiation portion toward the second end portion of the substrate mounting portion. Thus, the heat radiation effect of the first heat radiation portion can be improved while saving a space for the display module.

In this case, the folded portion is preferably folded through a space with respect to the substrate mounting portion. According to this structure, the folded portion can be inhibited from coming into contact with the substrate mounting portion, whereby the heat radiation effect attained by the folded portion can be further improved.

In the aforementioned display having the folded portion folded through the space with respect to the substrate mounting portion, the folded portion and the substrate mounting portion are preferably arranged to be parallel to each other at a prescribed interval. According to this structure, the folded portion can be easily inhibited from coming into contact with the substrate mounting portion.

In the aforementioned display according to the aspect, a plurality of light sources are preferably provided at a prescribed interval along an extensional direction of a photoreceiving surface of the light guide, and the first heat radiation portion is preferably formed on a position corresponding to the plurality of light sources mounted on the substrate. According to this structure, the first heat radiation portion provided on the position corresponding to the plurality of light sources can effectively radiate heat generated by the plurality of light sources.

In this case, the second heat radiation portion is preferably also formed on a position corresponding to the plurality of light sources mounted on the substrate, in addition to the first heat radiation portion. According to this structure, the second heat radiation provided on the position corresponding to the plurality of light sources can also more effectively radiate the heat generated by the plurality of light sources.

In the aforementioned display having the first heat radiation portion formed on the position corresponding to the light sources, the light guide preferably has a rectangular shape, the substrate is preferably formed to extend along a side of the light guide having the rectangular shape, and the first heat radiation portion is preferably formed to extend along the extensional direction of the substrate. According to this structure, the heat radiation area of the first heat radiation portion can be more enlarged as compared with a case where the first heat radiation portion is formed only on the position corresponding to the light sources, for example, whereby the heat radiation effect of the first heat radiation portion can be further improved.

In this case, the second heat radiation portion is preferably also formed to extend along the extensional direction of the substrate, in addition to the first heat radiation portion. According to this structure, a heat radiation area of the second heat radiation portion can be more enlarged as compared with a case where the second heat radiation portion is formed only on the position corresponding to the light sources, for example, whereby the heat radiation effect of the second radiation portion can be further improved.

In the aforementioned display having the first heat radiation portion including the folded portion, the anteroposterior length of the folded portion is preferably larger than the anteroposterior thickness of the light guide. According to this structure, a heat radiation area of the folded portion can be more enlarged as compared with a case where the anteroposterior length of the folded portion is smaller than the anteroposterior thickness of the light guide, whereby the heat radiation effect attained by the folded portion can be further improved.

In the aforementioned display having the first heat radiation portion including the folded portion, the first heat radiation portion preferably includes a planar portion in the form of a planar surface extending from the first end portion of the substrate mounting portion in a direction intersecting with the substrate mounting portion and the folded portion folded from an end portion of the planar portion toward the second end portion of the substrate mounting portion. According to this structure, the heat radiation area of the first heat radiation portion can be easily enlarged due to the planar portion in the form of a planar surface and the folded portion folded from the end portion of the planar portion toward the second end portion of the substrate mounting portion, whereby the heat radiation effect of the first heat radiation portion can be easily improved.

In this case, the planar portion and the folded portion are preferably formed to extend in directions orthogonal to each other. According to this structure, the folded portion does not protrude outward from the planar portion in plan view, whereby the length (plane area) of the first heat radiation portion, including the planar portion and the folded portion, in the direction opposite to the light guide can be reduced. Consequently, the space for the display module can be further saved.

In the aforementioned display having the first heat radiation portion including the folded portion, the folded portion is preferably folded from the first end portion of the substrate mounting portion toward the second end portion of the substrate mounting portion without through a planar portion. According to this structure, the length (plane area) of the first heat radiation portion in the direction opposite to the light guide can be more reduced by folding the first heat radiation portion toward the second end portion of the substrate mounting portion without through a planar portion, whereby the space for the display module can be further saved.

In the aforementioned display according to the aspect, the platelike member of a metal is preferably a back-side holding member holding the light guide and the substrate from the back side. According to this structure, the number of components can be further reduced as compared with a case where the display is provided with the platelike member for heat radiation separately from the back-side holding member.

In this case, the display module preferably further includes a front-side holding member of a metal holding the light guide and the substrate from the front side and an intermediate holding member of resin arranged between the front-side holding member and the back-side holding member for holding the back-side holding member. According to this structure, the front-side, intermediate and back-side holding members can stably support the light guide and the substrate.

In the aforementioned display according to the aspect, the light source preferably includes an LED, and the display cell preferably includes a liquid crystal display cell. According to this structure, a liquid crystal display module capable of efficiently radiating heat generated by an LED can be provided without increasing the number of components.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a perspective view showing the overall structure of a liquid crystal television according to an embodiment of the present invention;
Fig. 2 is an exploded perspective view showing the internal structure of a television body of the liquid crystal television according to the embodiment of the present invention;
Fig. 3 is a sectional view taken along the line 200-200 in Fig. 2;
Fig. 4 is a perspective view showing the structures of LEDs and a glass epoxy substrate of a liquid crystal display module according to the embodiment of the present invention;
Fig. 5 is a plan view showing a state where a front frame, a liquid crystal display cell and a mold frame are removed from the liquid crystal display module according to the embodiment of the present invention;
Fig. 6 is a perspective view showing the overall structure of a rear frame of the liquid crystal display module according to the embodiment of the present invention;
Fig. 7 illustrates the rear frame of the liquid crystal display module according to the embodiment of the present invention as viewed from below; and
Fig. 8 is a sectional view of a liquid crystal display module according to a modification of the embodiment of the present invention.

### DESCRIPTION OF THE PREFERRED EMBODIMENTS

An embodiment of the present invention is now described with reference to the drawings.

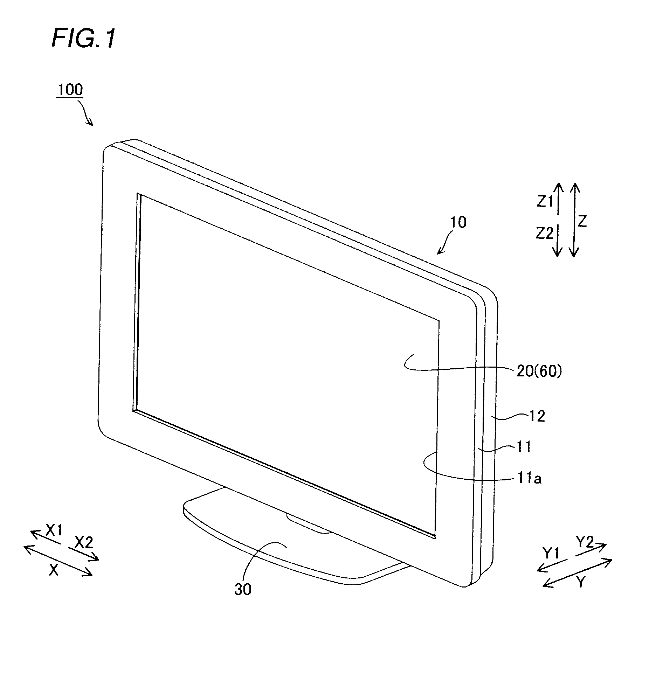

First, the structure of a liquid crystal television 100 according to the embodiment of the present invention is described with reference to Figs. 1 to 7. The liquid crystal television 100 is an example of the "display" in the present invention.

As shown in Fig. 1, the liquid crystal television 100 according to the embodiment of the present invention includes a television body 10 having a display portion 20 displaying images and a stand member 30 supporting the television body 10 from below (along arrow Z2).

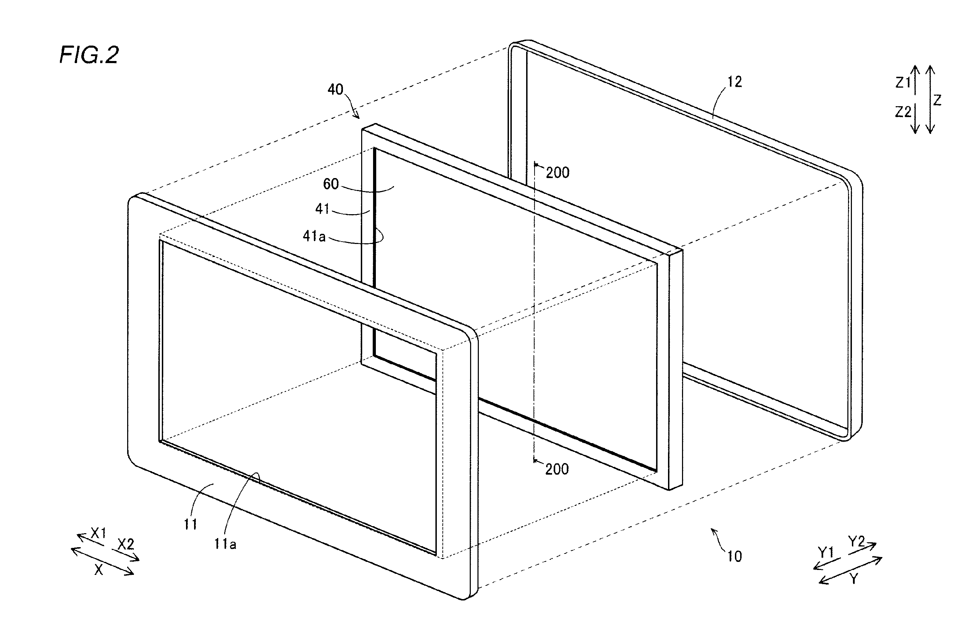

As shown in Figs. 1 and 2, the television body 10 includes front and rear cabinets 11 and 12 made of resin and a liquid crystal display module 40 having a liquid crystal display cell 60 constituting the display portion 20. The front and rear cabinets 11 and 12 are examples of the "housing" in the present invention. The liquid crystal display module 40 and the liquid crystal display cell 60 are examples of the "display module" and the "display cell" in the present invention respectively.

As shown in Figs. 1 and 2, the front cabinet 11 is arranged on the front side (along arrow Y1) of the liquid crystal television 100. The front cabinet 11 is in the form of a frame as viewed from the front side (as viewed along arrow Y1). More specifically, the front cabinet 11 has a substantially rectangular contour as viewed from the front side (as viewed along arrow Y1), and includes a rectangular opening 11a. The opening 11a is provided for exposing the display portion 20 (the liquid crystal display cell 60 of the liquid crystal display module 40).

As shown in Figs. 1 and 2, the rear cabinet 12 is arranged on the back side (along arrow Y2) of the liquid crystal television 100. This rear cabinet 12 is formed to engage with the front cabinet 11. The rear cabinet 12 has a substantially rectangular contour as viewed from the front side (as viewed along arrow Y1), and is recessed rearward (along arrow Y2).

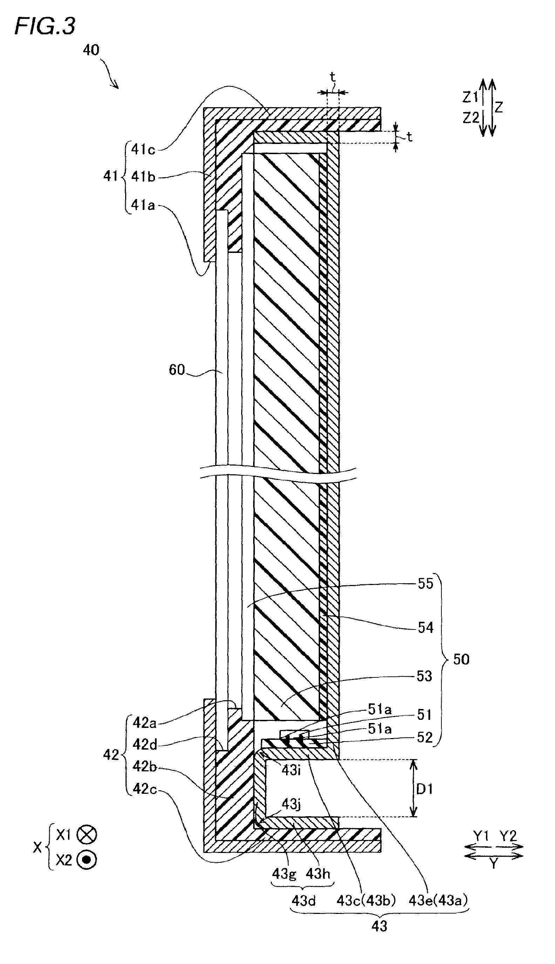

As shown in Fig. 2, the liquid crystal display module 40 is stored in the front and rear cabinets 11 and 12 of the television body 10. As shown in Fig. 3, the liquid crystal display module 40 includes a backlight portion 50, the liquid crystal display cell 60, a front frame 41 made of a metal, a mold frame 42 made of resin and a rear frame 43 made of a metal.

The front frame 41 is formed to hold the backlight portion 50 and the liquid crystal display cell 60 from the front side (along arrow Y1). The rear frame 43 is formed to hold the backlight portion 50 and the liquid crystal display cell 60 from the back side (along arrow Y2). The mold frame 42 is arranged between the front frame 41 and the rear frame 43. The mold frame 42 is formed to hold the rear frame 43. The front frame 41 is an example of the "front-side holding member" in the present invention. The mold frame 42 is an example of the "intermediate holding member" in the present invention. The rear frame 43 is an example of the "back-side holding member" or the "platelike member" in the present invention.

As shown in Fig. 3, the backlight portion 50 is held in a space formed in a region where the bottom surface of the rear frame 43 (surface of a bottom portion 43a, described later, along arrow Y1) and the bottom surface of the mold frame 42 (surface of a bottom portion 42b, described later, along arrow Y2) are opposed to each other. The backlight portion 50 includes a plurality of LEDs 51 emitting light, a glass epoxy substrate 52 mounted with the LEDs 51, a light guide 53 guiding light received from the LEDs 51 toward the liquid crystal display cell 60, a reflection sheet 54 reflecting light introduced into a photoreceiving surface (end surface along arrow Z2) of the light guide 53 opposed to the LEDs 51 toward the liquid crystal display cell 60 and an optical sheet 55 adjusting brightness etc. of light emitted from the light guide 53. Thus, the backlight portion 50 is formed to apply light to the back surface (along arrow Y2) of the liquid crystal display cell 60 from behind (along arrow Y2). The LEDs 51 and the glass epoxy substrate 52 are examples of the "light source" and the "substrate" in the present invention respectively.

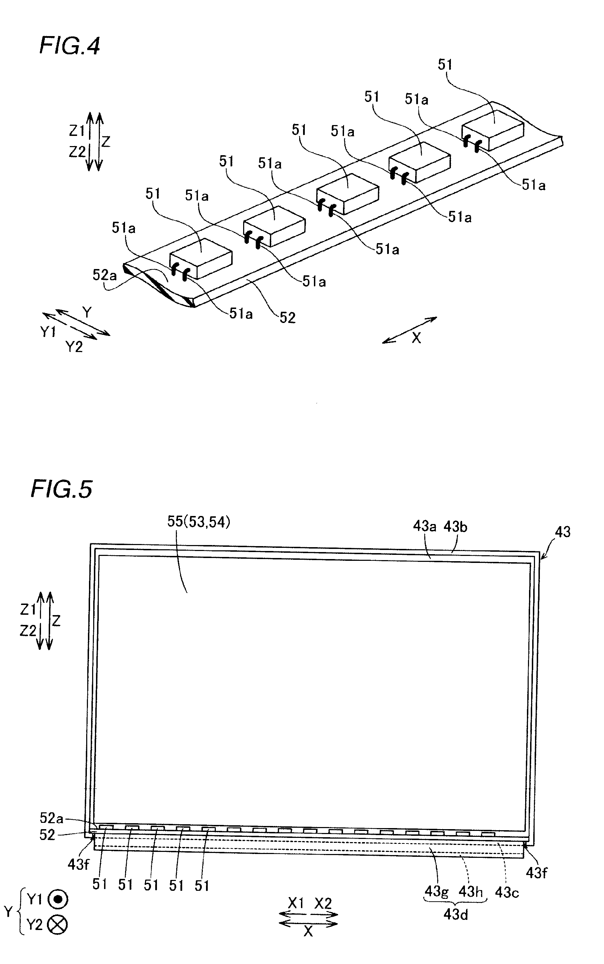

As shown in Fig. 3, the LEDs 51 and the glass epoxy substrate 52 are mounted on the inner side surface of a lower wall portion 43b (substrate mounting portion 43c) (along arrow Z2), described later, of the rear frame 43. As shown in Fig. 4, the plurality of LEDs 51 are mounted on a mounting surface 52a (along arrow Z1) of the glass epoxy substrate 52 at prescribed intervals along the extensional direction (direction X) of the glass epoxy substrate 52. The glass epoxy substrate 52 is formed to extend in the horizontal direction (direction X) along the lower side (along arrow Z2) of the light guide 53 having a rectangular shape, as shown in Fig. 5. The LEDs 51 and the glass epoxy substrate 52 are connected with each other through lead terminals 51a.

As shown in Figs. 3 and 5, the light guide 53 is arranged above the LEDs 51 (along arrow Z1) at a prescribed interval from the LEDs 51, and provided in the form of a rectangular plate extending in the vertical direction (direction Z) and the horizontal direction (direction X). This light guide 53 is made of resin such as acrylic resin having translucency. The reflection sheet 54 is arranged to be in contact with the back surface (along arrow Y2) of the light guide 53, and provided in the form of a rectangular plate extending in the vertical and horizontal directions. This reflection sheet 54 is made of resin such as PET (polyethylene terephthalate) having light reflectivity. The optical sheet 55 is arranged to be in contact with the surface (along arrow Y1) of the light guide 53, and provided in the form of a rectangular plate extending in the vertical and horizontal directions.

As shown in Figs. 2 and 3, the front frame 41 is arranged in front of the backlight portion 50 (along arrow Y1). This front frame 41 is mounted on the back surface (along arrow Y2) of the front cabinet 11. The front frame 41 has a rectangular contour as viewed from the front side (as viewed along arrow Y1), and includes a rectangular opening 41a for exposing the liquid crystal display cell 60. More specifically, the front frame 41 has a bottom portion 41b having the opening 41a and a wall portion 41c extending from outer peripheral portions (both end portions in the directions Y and Z) of the bottom portion 41b perpendicularly to the bottom portion 41b (along arrow Y2), as shown in Fig. 3. The front frame 41 is made of a metal such as SECC (electrolytic zinc-plated steel).

As shown in Fig. 3, the mold frame 42 is arranged to be in contact with the bottom surface of the front frame 41 (surface of the bottom portion 41b along arrow Y2) and the inner side surface of the wall portion 41c. The mold frame 42 has the bottom portion 42b having an opening 42a and a wall portion 42c extending from outer peripheral portions (both end portions in the directions Y and Z) of the bottom portion 42b perpendicularly to the bottom portion 42b (along arrow Y2). A step portion 42d is provided on a portion, closer to the front frame 41, around the opening 42a of the bottom portion 42b of the mold frame 42. A portion in the vicinity of an outer peripheral portion of the platelike liquid crystal display cell 60 extending in the vertical direction (direction Z) and the horizontal direction (direction X) is held between the step portion 42d and the front frame 41.

As shown in Fig. 3, the rear frame 43 is in contact with the inner side surface of the wall portion 42c of the mold frame 42, and arranged to be in contact with the reflection sheet 54 of the backlight portion 50. Further, the rear frame 43 has a rectangular contour as viewed from the front side (as viewed along arrow Y1) and is recessed rearward (along arrow Y2), as shown in Figs. 3, 5 and 6. More specifically, the rear frame 43 has the platelike bottom portion 43a having no opening and the platelike wall portion 43b extending from outer peripheral portions (both end portions in the directions Y and Z) of the bottom portion 43a perpendicularly to the bottom portion 43a (along arrow Y1). The thickness t (see Fig. 3) of the platelike bottom portion 43a and the platelike wall portion 43b is about 0.6 mm. The rear frame 43 is made of a metal such as SECC (electrolytic zinc-plated steel). Further, the rear frame 43 has a function of radiating heat transmitted from the LEDs 51, as described later.

According to this embodiment, the rear frame 43 is formed to integrally include the substrate mounting portion 43c mounted with the glass epoxy substrate 52, a first heat radiation portion 43d formed continuously to a first end portion (along arrow Y1) of the substrate mounting portion 43c and a second heat radiation portion 43e formed continuously to a second end portion (along arrow Y2) of the substrate mounting portion 43c, as shown in Figs. 3 and 5 to 7.

According to this embodiment, the substrate mounting portion 43c, the first heat radiation portion 43d and the second heat radiation portion 43e are formed to extend along the extensional direction (direction X) of the glass epoxy substrate 52 respectively, as shown in Figs. 5 to 7. In other words, the substrate mounting portion 43c, the first heat radiation portion 43d and the second heat radiation portion 43e are formed on positions corresponding to the plurality of LEDs 51 mounted on the mounting surface 52a of the glass epoxy substrate 52 respectively, as shown in Fig. 5.

As shown in Figs. 3 and 5, the substrate mounting portion 43c of the rear frame 43 is provided in the form of a plate mounted with a surface (along arrow Z2) of the glass epoxy substrate 52 opposite to the mounting surface 52a. More specifically, the substrate mounting portion 43c is the wall portion 43b positioned on a lower side (along arrow Z2) of the rear frame 43.

As shown in Figs. 5 to 7, the first heat radiation portion 43d of the rear frame 43 is provided in the form of a plate extending from the first end portion (along arrow Y1) of the substrate mounting portion 43c oppositely to the light guide 53 (along arrow Z2). More specifically, the first heat radiation portion 43d is formed to extend along arrow Z2 from a portion between two groove portions 43f provided in the vicinity of both end portions of the first end portion of the substrate mounting portion 43c in the horizontal direction (direction X).

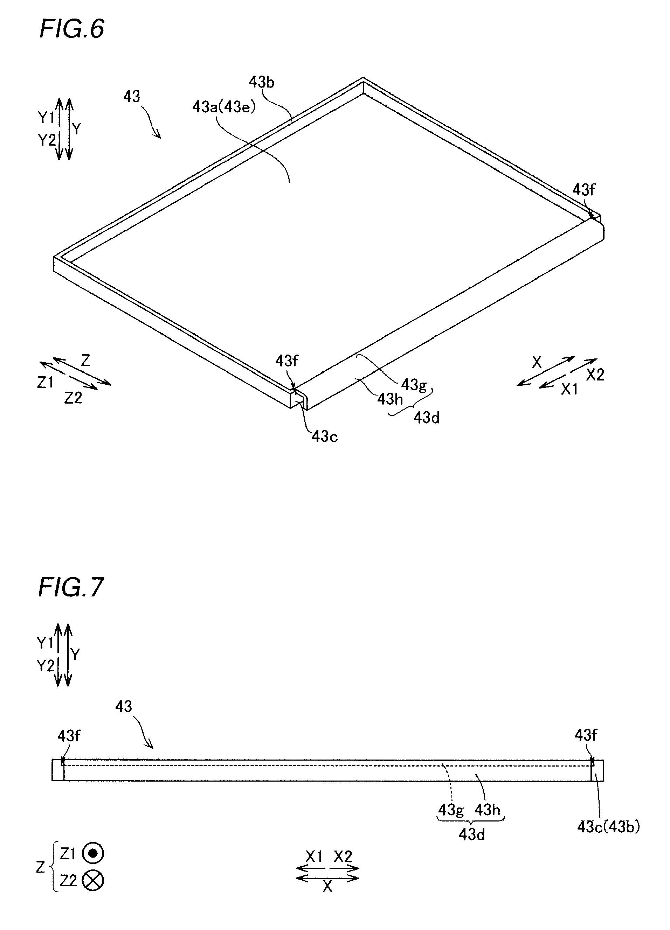

As shown in Figs. 3 and 6, the first heat radiation portion 43d is folded toward the second end portion (along arrow Y2) of the substrate mounting portion 43c. In other words, the first heat radiation portion 43d is constituted of a planar portion 43g formed continuously to the first end portion (along arrow Y1) of the substrate mounting portion 43c and a folded portion 43h formed continuously to an end portion (along arrow Z2) of the planar portion 43g opposite to the substrate mounting portion 43c.

As shown in Figs. 3 and 6, the planar portion 43g of the first heat radiation portion 43d is provided in the form of a planar surface extending from the first end portion (along arrow Y1) of the substrate mounting portion 43c in a direction (along arrow Z2) orthogonal to the substrate mounting portion 43c. As shown in Fig. 3, the boundary (corner portion 43i) between the planar portion 43g and the substrate mounting portion 43c has a rounded sectional shape.

As shown in Figs. 3 and 6, the folded portion 43h of the first heat radiation portion 43d is formed by folding the end portion (along arrow Z2) of the planar portion 43g opposite to the substrate mounting portion 43c toward the second end portion (along arrow Y2) of the substrate mounting portion 43c. The boundary (corner portion 43j) between the folded portion 43h and the planar portion 43g has a rounded sectional shape.

As shown in Figs. 3 and 6, the folded portion 43b and the planar portions 43g are formed to extend in directions (directions Y and Z) orthogonal to each other. As shown in Fig. 3, the length of the folded portion 43b in the anteroposterior direction (direction Y) is larger than the thickness of the light guide 53 in the anteroposterior direction (direction Y).

As shown in Fig. 3, the folded portion 43h is folded at a space from the substrate mounting portion 43c. More specifically, the folded portion 43b and the substrate mounting portion 43c are arranged to be parallel to each other at a prescribed interval D1. The interval D1 between the folded portion 43b and the substrate mounting portion 43c is preferably set to at least about 2 mm and not more than about 3 mm.

As shown in Figs. 3 and 6, the second heat radiation portion 43e of the rear frame 43 is provided in the form of a plate extending from the second end portion (along arrow Y2) of the substrate mounting portion 43c of the rear frame 43 oppositely to the first heat radiation portion 43d (along arrow Z1). More specifically, the second heat radiation portion 43e is the bottom portion 43a of the rear frame 43.

According to the aforementioned structure, heat generated by the LEDs 51 when emitting light is transmitted to the substrate mounting portion 43c of the rear frame 43 through the glass epoxy substrate 52. The heat transmitted to the substrate mounting portion 43c is radiated from the first end portion (along arrow Y1) of the substrate mounting portion 43c through the first heat radiation portion 43d (the planar portion 43g and the folded portion 43h), and radiated from the second end portion (along arrow Y2) of the substrate mounting portion 43c through the second heat radiation portion 43e. In other words, the heat generated by the LEDs 51 is radiated to both sides of the LEDs 51 (in the extensional directions (along arrows Z2 and Z1) of the first and second heat radiation portions 43d and 43e).

According to this embodiment, as hereinabove described, the rear frame 43 made of a metal is formed to integrally include the substrate mounting portion 43c mounted with the glass epoxy substrate 52, the first heat radiation portion 43d extending from the first end portion (along arrow Y1) of the substrate mounting portion 43c oppositely to the light guide 53 (along arrow Z2) and the second heat radiation portion 43e extending from the second end portion (along arrow Y2) of the substrate mounting portion 43c oppositely to the first heat radiation portion 43d (along arrow Z1). Thus, the first and second heat radiation portions 43d and 43e formed integrally with the substrate mounting portion 43c mounted with the glass epoxy substrate 52 can radiate the heat generated by the LEDs 51 to both sides of the LEDs 51 (in the extensional directions (along arrows Z2 and Z1) of the first and second heat radiation portions 43d and 43e). Consequently, the heat generated by the LEDs 51 can be efficiently radiated without increasing the number of components, dissimilarly to a case where the liquid crystal television 100 is separately provided with a member for radiating the heat generated by the LEDs 51 to both sides of the LEDs 51.

According to this embodiment, as hereinabove described, the first heat radiation portion 43d of the rear frame 43 is formed to include the folded portion 43h folded toward the second end portion (along arrow Y2) of the substrate mounting portion 43c. Thus, a heat radiation area of the first heat radiation portion 43d can be enlarged while reducing the length (plane area) of the first heat radiation portion 43d in a direction (along arrow Z2) opposite to the light guide 53 by folding the first heat radiation portion 43d toward the second end portion of the substrate mounting portion 43c. Consequently, the heat radiation effect of the first heat radiation portion 43d can be improved while saving a space for the liquid crystal display module 40.

According to this embodiment, as hereinabove described, the folded portion 43h of the rear frame 43 is formed by folding the end portion of the planar portion 43g through a space with respect to the substrate mounting portion 43c. Thus, the folded portion 43h can be inhibited from coming into contact with the substrate mounting portion 43c, whereby the heat radiation effect attained by the folded portion 43h can be further improved.

According to this embodiment, as hereinabove described, the folded portion 43h and the substrate mounting portion 43c of the rear frame 43 are arranged to be parallel to each other through the prescribed interval D1 (see Fig. 3). Thus, the folded portion 43h can be easily inhibited from coming into contact with the substrate mounting portion 43c.

According to this embodiment, as hereinabove described, the plurality of LEDs 51 are provided at the prescribed intervals along the extensional direction (direction X) of the photoreceiving surface (end surface along arrow Z2 opposed to the LEDs 51) of the light guide 53, and the first and second heat radiation portions 43d and 43e of the rear frame 43 are formed on the positions corresponding to the plurality of LEDs 51 mounted on the glass epoxy substrate 52. Thus, the first and second heat radiation portions 43d and 43e formed on the positions corresponding to the plurality of LEDs 51 can effectively radiate the heat generated by the LEDs 51.

According to this embodiment, as hereinabove described, the glass epoxy substrate 52 is formed to extend in the horizontal direction (direction X) along the lower side (along arrow Z2) of the rectangular light guide 53, and the first and second heat radiation portions 43d and 43e of the rear frame 43 are formed to extend along the extensional direction (direction X) of the glass epoxy substrate 52. Thus, heat radiation areas of the first and second heat radiation portions 43d and 43e can be more enlarged as compared with a case where the first and second heat radiation portions 43d and 43e are formed only on the positions corresponding to the LEDs 51, for example, whereby the heat radiation effects of the first and second heat radiation portions 43d and 43e can be further improved.

According to this embodiment, as hereinabove described, the length of the folded portion 43h of the rear frame 43 in the anteroposterior direction (direction Y) is rendered larger than the anteroposterior thickness of the light guide 53. Thus, a heat radiation area of the folded portion 43h can be more enlarged as compared with a case where the anteroposterior length of the folded portion 43h is smaller than the anteroposterior thickness of the light guide 53, whereby the heat radiation effect attained by the folded portion 43h can be further improved.

According to this embodiment, as hereinabove described, the first heat radiation portion 43d of the rear frame 43 is constituted of the planar portion 43g in the form of a planar surface extending from the first end portion (along arrow Y1) of the substrate mounting portion 43c in the direction (along arrow Z2) orthogonal to the substrate mounting portion 43c and the folded portion 43h folded from the end portion of the planar portion 43g toward the second end portion (along arrow Y2) of the substrate mounting portion 43c. Thus, the heat radiation area of the first heat radiation portion 43d can be easily enlarged by the planar portion 43g in the form of a planar surface and the folded portion 43h folded from the end portion of the planar portion 43g toward the second end portion (along arrow Y2) of the substrate mounting portion 43c. Consequently, the heat radiation effect of the first heat radiation portion 43d can be easily improved.

According to this embodiment, as hereinabove described, the planar portion 43g and the folded portion 43h of the first heat radiation portion 43d of the rear frame 43 are formed to extend in the directions (directions Z and Y) orthogonal to each other. Thus, the folded portion 43h does not protrude outward from the planar portion 43g in plan view (as viewed from the direction Y), whereby the length (plane area) of the first heat radiation portion 43g in the direction opposite to the light guide 53 can be reduced. Consequently, the space for the liquid crystal display module 40 can be further saved.

According to this embodiment, as hereinabove described, the rear frame 43 having the function of radiating the heat generated by the LEDs 51 holds the light guide 53 and the glass epoxy substrate 52. Thus, the number of components can be further reduced as compared with a case where the liquid crystal television 100 is separately provided with a member for radiating the heat generated by the LEDs 51 and that for holding the light guide 53 and the glass epoxy substrate 52.

According to this embodiment, as hereinabove described, the liquid crystal display module 40 is provided with the front frame 41 of a metal holding the light guide 53 and the glass epoxy substrate 52 from the front side (along arrow Y1) and the mold frame 42 of resin arranged between the front frame 41 and the rear frame 43. Thus, the front frame 41, the mold frame 42 and the rear frame 43 can more stably support the light guide 53 and the glass epoxy substrate 52.

Although the present invention has been described and illustrated in detail, it is clearly understood that the same is by way of illustration and example only and is not to be taken by way of limitation, the spirit and scope of the present invention being limited only by the terms of the appended claims.

For example, while the present invention is applied to the liquid crystal television employed as the display in the aforementioned embodiment, the present invention is not restricted to this. The present invention is also applicable to another display such as a monitor of a PC (Personal Computer).

While the first heat radiation portion of the rear frame is formed to include the folded portion in the aforementioned embodiment, the present invention is not restricted to this. According to the present invention, the first heat radiation portion of the rear frame may alternatively be formed to include no folded portion. For example, the first heat radiation portion of the rear frame may be constituted of only the planar portion.

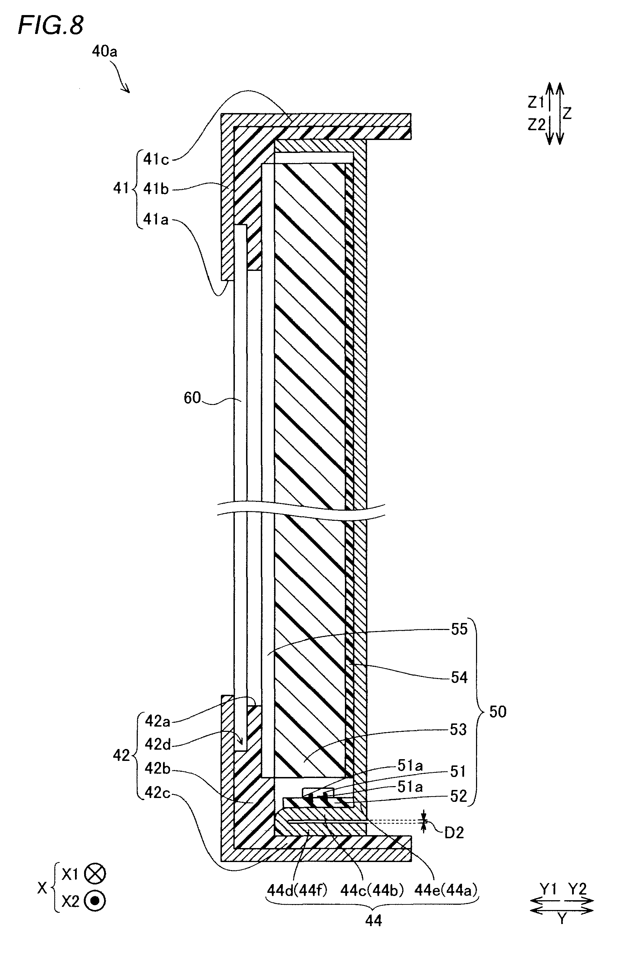

While the first heat radiation portion of the rear frame is constituted of the planar portion and the folded portion in the liquid crystal display module according to the aforementioned embodiment, the present invention is not restricted to this. According to the present invention, a first heat radiation portion 44d of a rear frame 44 may alternatively be constituted of only a folded portion 44f in a liquid crystal display module 40a, as in a modification of the embodiment shown in Fig. 8. The rear frame 44 is an example of the "platelike member" or the "back-side holding member" in the present invention. The liquid crystal display module 40a is an example of the "display module" in the present invention.

In the modification shown in Fig. 8, the folded portion 44f is formed by folding a first end portion (along arrow Y1) of a substrate mounting portion 44c toward a second end portion (along arrow Y2) of the substrate mounting portion 44c through a space, without through a planar portion. In the modification shown in Fig. 8, the substrate mounting portion 44c is a lower wall portion 44b (along arrow Z2) of the rear frame 44, while a second heat radiation portion 44e is a bottom portion 44a of the rear frame 44.

In the modification shown in Fig. 8, as hereinabove described, the first heat radiation portion 44d is folded toward the second end portion (along arrow Y2) of the substrate mounting portion 44c without through a planar portion so that the length (plane area) of the first heat radiation portion 44d in a direction (along arrow Z2) opposite to a light guide 53 can be reduced, whereby a space for the liquid crystal display module 40a can be further saved. While a slight space (interval D2) is provided between the substrate mounting portion 44c and the folded portion 44f in this modification, no space may be provided between the substrate mounting portion and the folded portion in the present invention.

While the platelike member and the back-side holding member according to the present invention are formed by the same member (rear frame) in the aforementioned embodiment, the present invention is not restricted to this. According to the present invention, the platelike member and the back-side holding member may alternatively be formed by different members. In other words, the platelike member may be a heat sink member, dedicated to heat radiation, provided separately from the back-side holding member.

## Claims

1. A display (100) comprising:
a display module (40, 40a); and
a housing (11, 12) storing said display module therein, wherein
said display module includes:
a substrate (52) having a mounting surface (52a) mounted with a light source (51),
a light guide (53) arranged to be opposed to said mounting surface of said substrate for guiding light received from said light source toward a display cell (60), and
a platelike member of a metal (43, 44), mounted with a surface of said substrate opposite to said mounting surface, having a function of radiating heat generated by said light source, and
said platelike member integrally includes a substrate mounting portion (43c, 44c) mounted with said substrate, a first heat radiation portion (43d, 44d) extending from a first end portion of said substrate mounting portion oppositely to said light guide and a second heat radiation portion (43e, 44e) extending from a second end portion of said substrate mounting portion oppositely to said first heat radiation portion.

2. The display according to claim 1, wherein
said first heat radiation portion includes a folded portion (43h, 44f) folded toward said second end portion of said substrate mounting portion.

3. The display according to claim 2, wherein
said folded portion is folded through a space with respect to said substrate mounting portion.

4. The display according to claim 3, wherein
said folded portion and said substrate mounting portion are arranged to be parallel to each other at a prescribed interval.

5. The display according to claim 1, wherein
a plurality of said light sources are provided at a prescribed interval along the extensional direction of a photoreceiving surface of said light guide, and
said first heat radiation portion is formed on a position corresponding to said plurality of light sources mounted on said substrate.

6. The display according to claim 5, wherein
said second heat radiation portion is also formed on a position corresponding to said plurality of light sources mounted on said substrate, in addition to said first heat radiation portion.

7. The display according to claim 5, wherein
said light guide has a rectangular shape,
said substrate is formed to extend along a side of said light guide having said rectangular shape, and
said first heat radiation portion is formed to extend along the extensional direction of said substrate.

8. The display according to claim 7, wherein
said second heat radiation portion is also formed to extend along the extensional direction of said substrate, in addition to said first heat radiation portion.

9. The display according to claim 2, wherein
the anteroposterior length of said folded portion is larger than the anteroposterior thickness of said light guide.

10. The display according to claim 2, wherein
said first heat radiation portion includes a planar portion (43g) in the form of a planar surface extending from said first end portion of said substrate mounting portion in a direction intersecting with said substrate mounting portion and said folded portion folded from an end portion of said planar portion toward said second end portion of said substrate mounting portion.

11. The display according to claim 10, wherein
said planar portion and said folded portion are formed to extend in directions orthogonal to each other.

12. The display according to claim 2, wherein
said folded portion is folded from said first end portion of said substrate mounting portion toward said second end portion of said substrate mounting portion without through a planar portion.

13. The display according to claim 1, wherein
said platelike member of a metal is a back-side holding member (43, 44) holding said light guide and said substrate from the back side.

14. The display according to claim 13, wherein
said display module further includes:
a front-side holding member of a metal (41) holding said light guide and said substrate from the front side, and
an intermediate holding member of resin (42) arranged between said front-side holding member and said back-side holding member for holding said back-side holding member.

15. The display according to claim 1, wherein
said light source includes an LED (51), and
said display cell includes a liquid crystal display cell (60).
